(19) Europäisches Patentamt
European Patent Office
Office européen des brevets

(11) **EP 2 552 987 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(21) Anmeldenummer: **11710209.5**

(22) Anmeldetag: **28.03.2011**

(51) Int Cl.:
*C08G 18/42* (2006.01)    *C08G 18/73* (2006.01)
*C09J 175/06* (2006.01)    *C08G 18/40* (2006.01)
*C08G 18/48* (2006.01)    *C09J 175/04* (2006.01)
*C08G 18/24* (2006.01)

(86) Internationale Anmeldenummer:
**PCT/EP2011/054684**

(87) Internationale Veröffentlichungsnummer:
**WO 2011/120895 (06.10.2011 Gazette 2011/40)**

(54) **SCHMELZKLEBEN MIT THERMOPLASTISCHEM POLYURETHAN**

HOTMELT ADHESIVE BONDING WITH THERMOPLASTIC POLYURETHANE

ENCOLLAGE À LA COLLE FUSIBLE AU MOYEN DE POLYURÉTHANE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2010 EP 10158187**

(43) Veröffentlichungstag der Anmeldung:
**06.02.2013 Patentblatt 2013/06**

(73) Patentinhaber: **BASF SE**
**67056 Ludwigshafen (DE)**

(72) Erfinder:
• **BOUDOU, Marine**
**68161 Mannheim (DE)**
• **HENZE, Oliver Steffen**
**49448 Lemförde (DE)**
• **KEMPFERT, Dirk**
**32351 Stemwede-Dielingen (DE)**

(56) Entgegenhaltungen:
EP-A1- 1 496 079    EP-A2- 0 323 700
WO-A1-98/01493    DE-A1- 19 546 657
JP-A- 2008 069 324

**Beschreibung**

Die Erfindung betrifft ein verbessertes Verfahren zum Schmelzkleben auf Basis eines thermoplastischen Polyurethans (TPU), sowie damit verklebte Substrate.

Es ist bereits bekannt, thermoplastische Polyurethane als Schmelzklebstoffe zu verwenden. Schmelzklebstoffe ermöglichen Fügeverfahren mit lösungsmittelfreien, 100 % Feststoff enthaltenen Klebstoff-Systemen, deren Verwendung weder eine Lösungsmittel-Rückgewinnungsanlage erfordert noch eine Abdunstung von Wasser wie bei Verwendung von Klebstoff-Systemen, die wasserbasiert sind. Schmelzklebstoffe werden als heiße Schmelzen aufgetragen, erstarren rasch beim Abkühlen und bauen damit ihre Festigkeit auf.

Aus der deutschen Auslegeschrift 1256822 ist es bereits bekannt, Schmelzen oder Lösungen von Umsetzungsprodukten von Diisocyanaten und Veresterungsprodukten aus Alkandicarbonsäuren als Klebstoffe zum Verkleben von Polyvinylchloridkunststoffen zu verwenden. Aus der deutschen Offenlegungsschrift 1930336 und DE 37 17 070 A1 ist es bereits bekannt, endständige Hydroxyl-Gruppen aufweisende Polyesterpolyurethane, erhältlich durch die Umsetzung von Polyesterdiolen, Kettenverlängerungsmitteln und einem organischen Diisocyanat als lösungsmittelhaltige Klebstoffe zu verwenden. Aus der DE 40 35 280 A1 sind kristalline, Isocyanat-Gruppen enthaltende Schmelzklebstoffe auf Basis von Präpolymeren bekannt. Ebenso wie andere reaktive Schmelzkleber mit endständigen Isocyanatgruppen, wie sie beispielsweise in der DE 101 63 857 A1, DE 197 00 014 A1 und DE195 19 391 A1 beschrieben sind, haben sie den Nachteil, dass sie mit Feuchtigkeit reagieren und daher für viele Zwecke nicht akzeptable Blasen erzeugen, sehr lange Reaktionszeiten haben und bei der Herstellung hohe Temperaturen benötigen.

Die in der Praxis verwendeten Schmelzklebstoffe auf Basis TPU sind in der Regel segmentiert und weisen so genannte Hart- und Weichsegmente auf. Die Hartsegmente werden erhalten durch Umsetzung der Diisocyanate mit niedermolekularen Kettenverlängerern, die Weichsegmente durch Umsetzung der Diisocyanate mit beispielsweise Polyolen oder Polyaminen mit einem Molekulargewicht vorzugsweise mehr als 499 g/mol. Nachteilig an derartigen Schmelzklebstoffen sind ihre Verarbeitungstemperatur von mehr als 160°C und ihre entsprechend hohen Schmelzviskositäten.

An sich ist bereits bekannt, segmentierte TPU ohne Kettenverlängerer herzustellen, siehe Iskender und Yilgor in: Polymer Reviews, 47:487 bis 510, 2007. Gemäß der US 2005/0288476 A1 sind segmentierte, thermoplastische Polyurethane erhältlich durch stöchiometrische Umsetzung von Hydroxyl oder Amin gekappter Polymeren oder Oligameren, als Weichsegmente mit Diisocyanaten in Abwesenheit von Kettenverlängerern. Diese TPU weisen so genannte monodisperse Hartsegmente auf und sollen in der Schmelze verarbeitbar sein. Eine Verwendung als Schmelzkleber wird aber nicht nahegelegt.

Die in der Praxis verwendeten Schmelzklebstoffe auf Basis TPU, herstellbar auf einem Reaktionsextruder, haben in der Regel einen hohen Schmelzpunkt, (d. h. höher als 160°C), was die Handhabung schwierig macht.

Aufgabe der vorliegenden Erfindung ist es, ein verbessertes Verfahren zum Schmelzkleben zur Verfügung zu stellen, welches bei einer niedrigen Schmelztemperatur und bei niedriger Schmelzviskosität durchgeführt werden kann und wobei der Schmelzkleber einfach und schnell hergestellt werden kann sowie blasenarm und schnell verklebt, um dadurch Energie einsparen zu können und eine hohe Produktivität beim Kunden zu ermöglichen, bei gleichzeitig einem hohen Anspruch an die mechanische Festigkeit.

Die Erfindung betrifft ein Verfahren zum Schmeizkleben unter Verwendung eines thermoplastischen Polyurethans (TPU), erhältlich aus im wesentlichen einem symmetrischen aliphatischen Diisocyanat A und wenigstens einer Isocyanat-reaktiven Verbindung B enthaltend Hydroxyl- und/oder Aminogruppen als Klebstoff, dadurch gekennzeichnet, dass

- das zahlenmittlere Molekulargewicht (Mn) der Verbindung B wenigstens 2200 g/mol beträgt, mit der Maßgabe, dass es wenigstens 950 g/mol beträgt, wenn die Verbindung B ein Sebazinsäureester ist,
- das Diisocyanat A und die Isocyanat-reaktive Verbindung B in Gegenwart eines Katalysators für die Polyadditionsreaktion umgesetzt werden,
- das TPU keinen Kettenverlängerer enthält,
- das TPU eine Kennzahl K von weniger als 1000 hat und
- das Schmelzkleben durch das TPU in geschmolzenem Zustand bei einer Temperatur von 50 °C bis 160°C in Abwesenheit von Lösungsmitteln erfolgt und
- die Verbindung B ein Polyester ist und zusätzlich ein Polyetherol verwendet wird.

Das Verfahren erfolgt in Abwesenheit von Lösungsmitteln, wobei unter Lösungsmitteln Substanzen verstanden werden, welche das TPU lösen, insbesondere Dimethylformamid, Methylethylketon, Ethylacetat, Acetone, Methylenchlorid oder Tetrahydrofuran. Das erfindungsgemäß verwendete TPU enthält keine Kettenverlängerer, wobei unter Kettenverlängerem Verbindungen verstanden werden, die wenigstens zwei Isocyanat-reaktive Gruppen, insbesondere Hydroxyl- oder Aminogruppen aufweisen, und wobei derartige Verbindungen ein Molekulargewicht von 499 g/mol oder weniger aufweisen. Insbesondere sind in dem TPU keine üblichen Kettenverlängerer wie geradkettige Alkandiole mit zwei oder mehr Kohlenstoffatomen wie Butandiol-1,4 und Hexandiol-1,6 enthalten.

Vorteile der Erfindung, die bei bevorzugten Ausführungsformen besonders ausgeprägt sind, sind die Verwendung von preiswertem thermoplastischem Polyurethan, das in einem Verfahrensschritt im Extruder hergestellt werden kann. Dieses Material hat den Vorteil, dass es schnell aushärtet durch kürzere Kristallisationszeiten, bevorzugt in weniger als 1 Stunde und daher auch ein schnelleres Heißkleben ermöglicht. Zudem werden sowohl bei der Herstellung, insbesondere auch beim Heißkleben niedrigere Temperaturen benötigt, die eine einfachere Handhabung erlauben und bei großflächiger Anwendung auch einen nicht unerheblichen Energieeinsparung bringen.

In einer besonders bevorzugten Ausführungsform hat das thermoplastische Polyurethan eine Kennzahl von 850 bis 999, bevorzugt von 850 bis 990 und besonders bevorzugt von 850 bis 980.

Die Kennzahl ist definiert durch das molare Verhältnis der insgesamt bei der Umsetzung eingesetzten Isocyanatgruppen der Komponente A zu den gegenüber Isocyanaten reaktiven Gruppen, d. h. den aktiven Wasserstoffen, der Komponenten B. Bei einer Kennzahl von 1000 kommt auf eine Isocyanatgruppe der Komponente A ein aktives Wasserstoffatom, d. h. eine gegenüber Isocyanaten reaktive Funktion, der Komponenten (B). Bei Kennzahlen unter 1000 liegen weniger Isocyanatgruppen als Gruppen mit aktiven Wasserstoffatomen, z. B. OH-Gruppen, vor.

Die Kennzahl wird berechnet nach der Formel

$$K = \frac{n_{ISO}}{n_{OH}} = \frac{f_{ISO1} n_{ISO1}}{f_{P1} n_{P1}} \times 1000$$

**FORMEL 1**

worin bedeuten

$K$ : Kennzahl

$n_{ISO}$ : Gesamt Molanteil an NCO-haltigen Molekülen in Mol

$n_{OH}$ : Gesamt Molanteil an aktivem Wasserstoff, insbesondere an OH-haltigen Molekülen (Polyolen) in Mol

$f_{ISO1}$ : Funktionalität von isocyanat 1

$n_{ISO1}$ : Molanteil von Isocyanat 1

$f_{P1}$ : Funktionalität von Polyol 1

$n_{P1}$ : Molanteil von Polyol 1

Verfahren zur Herstellung von Polyurethanen sind allgemein bekannt. Beispielsweise können die Polyurethane durch Umsetzung von Isocyanaten mit gegenüber Isocyanaten reaktiven Verbindungen in Gegenwart von Katalysatoren und ggf. üblichen Hilfsstoffen hergestellt werden.

im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten Isocyanate A, mit Isocyanaten reaktive Verbindung (B) sowie gegebenenfalls Katalysatoren D, welche die Reaktion zwischen den NCO-Gruppen der Diisocyanate A und den Hydroxylgruppen der Aufbaukomponente B, das auch als Polyol angesprochen wird, beschleunigen und/oder Hilfsmittel E sollen im Folgenden beispielhaft beschrieben werden:

Die Isocynate A als auch die mit Isocynaten reaktiven Verbindungen (Polyole) B werden auch als Aufbaukomponenten angesprochen.

Erfingdungsgemäß zu verwendende Komponenten:

Als organische Isocyanate (A) werden allgemein bekannte symmetrische aliphatische Isocyanate, bevorzugt Diisocyanate eingesetzt werden, beispielsweise Tri-, Tetra-, Penta-, Hexa-, Hepta- und/oder Oktamethylendiisocyanat, 1,4- und/oder 1,3-Bis(isocyanatomethyl)cyclohexan (HXDI), 1,4-Cyclohexan-diisocyanat, 4,4'-, 2,4'- und 2,2'-Dicyclohexylmethan-diisocyanat (H12MDI), bevorzugt Hexamethylendiisocyanat (HDI), 4,4'-, 2,4'- und 2,2'-Dicyclohexylmethan-diisocyanat (H12MDI), insbesondere Hexamethylendiisocyanat.

Unter einem symmetrischen Isocyanat wird ein Isocyanat verstanden, das ein symmetrisches Molekül ist, das zwei Isocyanatgruppen mit gleicher Reaktivität hat. Im Fall von einem Isomergemisch ist dies das Mehrheitsisomer.

Bei dem erfindungsgemäßen Verfahren wird im wesentlichen ein Isocyant eingesetzt. Im wesentlichen ein TPU heißt hier, dass neben dem wesentlichen Isocyanat andere Isocyanate, bezogen auf das Isocyanat mit weniger als 5 Gew. %, weiter bevorzugt weniger als 3 Gew. % und besonders bevorzugt weniger als 1 Gew.% eingesetzt werden. Oligomere, die durch Addition eines Isocyanats entstehen, werden dabei nicht berücksichtigt, diese Produkte werden dem als im wesentlichen einem Isocyanat zugerechnet. Als gegenüber Isocyanaten reaktive Verbindungen (B) können allgemein bekannte, gegenüber Isocyanaten reaktive, Verbindungen eingesetzt werden, die Hydroxyl- und/oder Aminogruppen enthalten, wobei das zahlenmittlere Molekulargewicht (Mn) der Verbindung B wenigstens 2200 g/mol beträgt, mit der Maßgabe, dass es wenigstens 950 g/mol beträgt, wenn die Verbindung B ein Sebazinsäureester ist. Bevorzugt werden Polyesterole, Polyetherole und/oder Polycarbonatdiole, die üblicherweise auch unter dem Begriff "Polyole" zusammengefasst werden. Die mit Isocyanaten reaktive Verbindungen haben ein zahlenmittleres Molekulargewicht (Mn) von maximal 12000 g/mol, bevorzugt maximal 6000 g/mol, insbesondere maximal 4000 g/mol, und bevorzugt einer mittleren Funktionalität von 1,8 bis 2,3, bevorzugt 1,9 bis 2,2, insbesondere 2.

Alle Grenzwerte die in der Beschreibung angegeben sind, sind mit allen weiteren Grenzwerten beliebig kombinierbar, auch wenn aus Gründen der Übersichtlichkeit nicht jede einzelne Kombination aufgezählt wird.

Eine bevorzugte mit Isocyanat reaktive Verbindung (B) ist Polyesterdiol. In einer weiteren bevorzugten Ausführungsform wird als Isocyanat-reaktive Verbindung (B) ein Polyesterdiol, insbesondere auf Basis Butandiol und Adipinsäure, mit einem zahlenmittleren Molekulargewicht (Mn) von wenigstens 2200 g/mol in Abmischung mit einem Polyetherdiol verwendet. Das Polyetherdiol kann in dieser Abmischung ein zahlenmittleres Molekulargewicht (Mn) von weniger als 2200 g/mol haben und wenigstens 500 g/mol, insbesondere wenigstens 650 g/mol. In einer besonders bevorzugten Ausführungsform ist das zur Abmischung verwendete Polyetherdiol ein Polytetramethylenglycol. In einer besonders bevorzugten Ausführungsform werden in dieser Abmischung auf ein Gewichtsteil Polyesterdiol 0,05 bis 1 Gewichtsteile Polyetherdiol eingesetzt.

In einer anderen bevorzugten Ausführungsform wird als mit Isocyanat reaktive Verbindung (B) ein Sebacinsäureester verwendet, wobei der Sebacinsäureester weiter bevorzugt auf Butandiol basiert und ein zahlenmittleres Molekulargewicht (Mn) von wenigsten 950 g/mol hat.

Geeignete Katalysatoren (D), welche die Reaktion zwischen den NCO-Gruppen der Diisocyanate (A) und den Hydroxylgruppen der Aufbaukomponente (B) beschleunigen, sind die aus dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Zinnverbindungen. Die Katalysatoren werden bevorzugt in Mengen von 0,00001 bis 0,1 Gew.-Teilen pro 100 Gew.-Teile Polyhydroxylverbindung (B) eingesetzt.

Neben Katalysatoren (D) können den Aufbaukomponenten (A) bis (B) auch übliche Hilfsmittel (E) hinzugefügt werden. Genannt seien beispielsweise oberflächenaktive Substanzen, Flammschutzmittel, Keimbildungsmittel, Oxidationsstabilisatoren, Gleitund Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher.

Als Hydrolyseschutzmittel werden bevorzugt oligomere und/oder polymere, aliphatische oder aromatische Carbodiimide verwendet. Um die erfindungsgemäßen TPU gegen Alterung zu stabilisieren, werden dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S. 98 - S. 136. Ist das erfindungsgemäße TPU während seiner Anwendung thermooxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S. 98-107 und S. 116-121. Bevorzugt sind solche phenolischen Antioxidantien, deren zahlenmittleres Molekulargewicht (Mn) größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl) propionate) (Irganox (1010). Die phenolischen Antioxidantien werden im Allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU.

Bevorzugt werden die TPU zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Formamidine, der Benzylidenemalonate, der Diarylbutadiene, Triazine, sowie der Benzotriazole. Beispiele für kommerzielle UV-Absorber finden sich in Plastics Additive Handbook, 5th edition, H. Zweifel, ed, Hanser Publishers, München, 2001, Seite 116 - 122. In einer bevorzugten Ausführungsform weisen die UV-Absorber ein zahlenmittleres Molekulargewicht (Mn) von größer als 300 g/mol, insbesondere größer als 390 g/mol, auf. Ferner sollten die bevorzugt verwendeten UV-Absorber ein zahlenmittleres Molekulargewicht (Mn) von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin® 213, Tinuvin® 328, Tinuvin® 571, sowie Tinuvin® 384 und das Eversorb® 82. Bevorzugt werden die UV-Absorber in Mengen zwischen 0,01 und 5 Gew.-%, bezogen auf die Gesamtmasse TPU zudosiert, besonders bevorzugt zwischen 0,1 und 2,0 Gew.-%, insbesondere zwischen 0,2 und 0,5 Gew.-%, jeweils bezogen auf das Gesamtgewicht des TPU. Oft ist eine oben beschriebene UV-Stabilisierung basierend auf einem Antioxidans und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponente (E) bevorzugt zusätzlich zu dem Antioxidans und dem UV-Absorber noch ein Hindered-Amine Light Stabilizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche Hals-Stabilisatoren finden sich in Plastics Additive Handbook, 5th edition, H. Zweifel, Hanser Publishers, München, 2001, S. 123 - 136. Als Hindered Amine Light Stabilizer werden bevorzugt Hindered Amine Light Stabilizer genommen, bei denen das zahlenmittlere Molekulargewicht (Mn) größer als 500 g/mol ist. Ferner sollte das zahlenmittlere Molekulargewicht (Mn) der bevorzugten HALS-Verbindungen bevorzugt nicht größer als 10000 g/mol, besonders bevorzugt nicht größer als 5000 g/mol sein. Besonders bevorzugte Hindered Amine Light Stabilizer sind bis-(1,2,2,6,6-pentamethyl-piperidyl) sebacat (Tinuvin® 765, Ciba Spezialitätenchemie AG) und das Kondensationsprodukt aus 1-hydroxyethyl-2,2,6,6-tetramethyl-4-hydroxypiperidine and succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des Produktes < 150 ppm, bevorzugt < 50 ppm, insbesondere bevorzugt < 10 ppm ist. HALS-Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das Gesamtgewicht des TPU. Eine besonders bevorzugte UV-Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001.

Die Herstellung der TPU kann nach den bekannten Verfahren kontinuierlich, beispielsweise mit Reaktionsextrudern, oder dem Bandverfahren nach dem one-shot- oder dem Prepolymer-Verfahren, oder diskontinuierlich nach dem bekannten Prepolymerprozess erfolgen. Bei diesen Verfahren können die zur Reaktion kommenden Komponenten (A), (B) und gegebenenfalls (D) und/oder (E) nacheinander oder gleichzeitig miteinander vermischt werden, wobei die Reaktion unmittelbar einsetzt. Beim Extruderverfahren werden die Komponenten (A), (B), (D) und ggf. (E) einzeln oder als Gemisch in den Extruder eingeführt und z. B. bei Temperaturen von 100°C bis 280°C, vorzugsweise 140°C bis 250°C, zur Reaktion gebracht. Die Schmelze wird granuliert und getrocknet.

In einer besonders bevorzugten Ausführungsform basiert das thermoplastische Polyurethan auf einem Polyester der Adipinsäure oder Sebacinsäure mit Butandiol und vorzugsweise HDI als Polyisocyanat.

Die Anwendung der erfindungsgemäßen Polyurethane als Schmelzkleber erfolgt bei erhöhter Temperatur. Vorzugsweise werden die Polyurethane kontinuierlich oder diskontinuierlich bei Temperaturen von 50 °C bis 160 °C, bevorzugt von 80°C bis 160°C und in einer anderen bevorzugten Ausführungsform von 60 °C bis 150 °C aufgeschmolzen und ihre Schmelze mit den zu klebenden Substraten in Kontakt gebracht. Diese Applikation auf mindestens eine der zu klebenden Flächen kann beispielsweise über Walzen, Düsen, Verspinnen der heißem Schmelzen mit einem heißen Luftstrom und Schmelzklebstofffolie mit einer heißen Presse erfolgen. Nach dem Auftragen des Schmelzklebers erfolgt in einer bevorzugten Ausführungsform sofort das Verkleben mit den zu verklebenden Substraten.

Das Auftragen des Klebstoffs erfolgt insbesondere kontinuierlich, wobei nach dem Auftrag des Schmelzklebers auf eine der zu verklebenden Flächen diese mit der anderen, eventuell vorgewärmten, klebstoffhaltigen oder klebstofffreien Fläche zusammengefügt wird, und der Verbund vorzugsweise unter Druck und eventueller Formgebung weiterverarbeitet wird.

Die zu verklebenden Substrate sind bevorzugt Textilien, Metalle, Holz, Holz enthaltende Produkte, Kork, Keramik, Glas und Glasfasern, sowie massive oder geschäumte Kunststoffe, beispielsweise ABS, PVC, Polyolefine, Polyurethane und Neopren®, das ein Polychloropren ist. Hierfür wird das erfindungsgemäße TPU bevorzugt verwendet. Besonderes bevorzugt sind Textilien, Glas, Polyurethan und Polychloropren. Hierbei können die erfindungsgemäßen Schmelzkleber für die verschiedensten Einsatzgebiete verwendet werden.

In einer weiteren Ausführungsform bezieht sich die vorliegende Erfindung auf Formkörper, enthaltend ein thermoplastisches Polyurethan, erhältlich aus wenigstens einem Diisocyanat A und wenigstens einer Isocyanat-reakfiven Verbindung B, enthaltend Hydroxyl- und/oder Aminogruppen als Schmelzklebstoff, dadurch gekennzeichnet, dass

- das zahlenmittlere Molekulargewicht (Mn) der Verbindung B wenigstens 2200 g/mol beträgt, mit der Maßgabe, dass es wenigstens 950 g/mol beträgt, wenn die Verbindung B ein Sebacinsäureester ist,
- das Diisocyanat A und die Isocyanat-reaktive Verbindung B in Gegenwart elnes Katalysators für die Polyadditionsreaktion umgesetzt werden,
- das TPU keinen Kettenverlängerer enthält und
- das TPU eine Kennzahl K von weniger als 1000 hat und
- die Verbindung B ein Polyester ist und zusätzlich ein Polyetherol verwendet wird.

Bevorzugte Formkörpern sind Rollen, Schuhsohlen, Verkleidungen in Automobilen, Schläuche, Beschichtungen, Kabel, Profile, Laminate, Fußböden für Gebäude und Transport, Steckverbindungen, Kabelstecker, Kissen, Faltenbälge, Sättel, Schäumen, auch durch zusätzliches Aufschäumen, Schleppkabel, Solarmodule, Wischerblätter, Kabelummantelungen, Dichtungen, Riemen, non woven Gewebe, Dämpfungselemente, Folien oder Fasern, die bevorzugt durch Spritzguss, Kalendrieren, Pulversintern und/oder Extrusion hergestellt wurden.

Weiterhin betrifft die Erfindung genannte Formteile, enthaltend eine Schmelzklebung unter Verwendung der erfindungsgemäß zu verwendenden TPU.

Beispiele

In den nachfolgenden Beispielen wurden folgende Komponenten verwendet:

Tabelle 1

| Kurzbezeichnung | Zusammensetzung |
| --- | --- |
| ISO-1 | 4,4-MDI |
| ISO-2 | HDI |
| Polyol 1 | Polyesterdiol (Butandiol-Adipinsäure) mit einem zahlenmittleren Molekulargewicht (Mn) von 2500g/mol) |
| Polyol 2 | Polyesterdiol (Butandiol-Sebazinsäure) mit einem zahlenmittleren Molekulargewicht (Mn) von 1000g/mol) |
| Polyol 3 | Polyesterdiol (Butandiol-Adipinsäure) mit einem zahlenmittleren Molekulargewicht (Mn) von 1000g/mol) |
| Polyol 4 | (Polytetramethylenglycol) mit einem zahlenmittleren Molekulargewicht (Mn) von 650 g/mol |

Mit diesen Komponenten wurden folgende Vergleiche durchgeführt:

Beispiel 1 (Vergleich)

Ein TPU wurde aus ISO-2 und Polyol 1 (OHZ = 46,0) unter Verwendung von Zinn-Dioctoat als Katalysator mit einem Doppelwellenextruder des Typs ZSK 58 der Firma Werner und Pfleiderer Stuttgart mit einer Verfahrensteillänge von 48 D, unterteilt in 12 Gehäuse hergestellt. TPU und Polyol wurden in einem derartigen Verhältnis eingesetzt, dass sich eine Kennzahl K von 970 ergab. Das Zinndioctoat wurde in einer Menge von 15 ppm, bezogen auf die Gesamtmasse, eingesetzt. Die Granulierung erfolgte mittels einer üblichen Unterwassergranuliereinrichtung der Firma Gala (UWG). Das Material wurde anschließend zur Spritzplatten (Dimension der Spritzplatten 110 x 25 x 2) verarbeitet. Die Testplatten wurden 20 Stunden bei 100°C getempert und deren mechanische Eigenschaften bestimmt.

Beispiel 2 (Vergleich)

Ein TPU wurde aus ISO-2 und Polyol 2 (OHZ = 112,6) unter Verwendung von Zinn-Dioctoat als Katalysator mit einem Doppelwellenextruder des Typs ZSK 58 der Firma Werner und Pfleiderer Stuttgart mit einer Verfahrensteillänge von 48 D, unterteilt in 12 Gehäuse, hergestellt. TPU und Polyol wurden in einem derartigen Verhältnis eingesetzt, dass sich eine Kennzahl K von 970 ergab. Die Granulierung erfolgte mittels einer üblichen Unterwassergranuliereinrichtung der Firma Gala (UWG). Das Material wurde anschließend zu Spritzplatten (Dimension der Spritzplatten 110 x 25 x 2) verarbeitet. Die Testplatten wurden 20 Stunden bei 100 °C getempert und deren mechanische Eigenschaften bestimmt.

Beispiel 3 (Erfindung)

Ein TPU wurde aus ISO-2, Polyol 1 (OHZ = 46,0) und Polyol 4 (OHZ=170,1) mit einem Doppelwellenextruder des Typs ZSK58 der Firma Werner und Pfleiderer, Stuttgart, mit einer Verfahrensteillänge von 48 D, unterteilt in 12 Gehäuse, hergestellt. Dabei wurden auf ein Gewichtsteil Polyol 1 0,57 Gewichtsteile Polyol 4 eingesetzt. Die Polyolmischung wurde mit dem Isocyanat in einem derartigen Verhältnis eingesetzt, dass sich eine Kennzahl K von 970 ergab. Die Polyadditionsreaktion wurde unter Verwendung von Zinn-Dioctoat als Katalysator durchgeführt, wobei das Zinn-Dioctoat in einer Menge von 40 ppm, bezogen auf die Gesamtmasse, eingesetzt wurde.

Es wurden die aus folgender Tabelle 3 ersichtlichen Eigenschaften bestimmt:

EP 2 552 987 B1

Tab. 2

| Eigenschaft | Einheit | Prüfvorschrift | Beispiel 1 Vergleich | Beispiel 2 Vergleich | Beispiel 3 Erfindung |
|---|---|---|---|---|---|
| Kennzahl | | | 970 | 970 | 970 |
| Dichte | g/cm$^3$ | DIN EN ISO 1183-1, B | 1,179 | 1,111 | 1.122 |
| Shore-Härte A | - | DIN 53 505 | 96 | 96 | 96 |
| Zugfestigkeit | MPa | DIN 53 504 | 17 | 22 | 10 |
| Reißdehnung | % | DIN 53 504 | 770 | 390 | 1060 |
| Weiterreißwiderstand | kN/m | DIN ISO 34-1 | 93 | 97 | 44 |
| Abrieb | mm$^3$ | DIN ISO 4649 | 99 | 8 | 298 |
| Schmelztemperatur | °C | | 68 | 127 | 64 |
| Kristallisationstemperatur | °C | | 9 | 27 | -15 |

An dem erfindungsgemäßen Beispiel3 erkennt man, dass ein TPU mit guten mechanischen Eigenschaften erhalten wird.

Das erfindungsgemäße Beispiel 4 zeigt deutlich die beste Kombination aus möglichst niedriger Schmelztemperatur und möglichst hoher Kristallisationstemperatur und ermöglicht die verbesserte Herstellung von TPU.

Beispiel 5 (Erfindung)

Ein TPU wurde aus ISO-2 und Polyol 1 (OHZ = 46,0) unter Verwendung von Zinn-Dioctoat als Katalysator mit einem Doppelwellenextruder des Typs ZSK 58 der Firma Werner und Pfleiderer Stuttgart mit einer Verfahrensteillänge von 48 D, unterteilt in 12 Gehäuse hergestellt. TPU und Polyol wurden in einem derartigen Verhältnis eingesetzt, dass sich eine Kennzahl K von 970 ergab. Das Zinndioctoat wurde in einer Menge von 15 ppm, bezogen auf die Gesamtmasse, eingesetzt. Die Granulierung erfolgte mittels einer üblichen Unterwassergranuliereinrichtung der Firma Gala (UWG). Das Material wurde anschließend zur Spritzplatten (Dimension der Spritzplatten 110 x 25 x 2) verarbeitet. Die Testplatten wurden 20 Stunden bei 100 °C getempert und deren mechanische Eigenschaften bestimmt.

Beispiel 6 (Erfindung)

Ein TPU wurde aus ISO-2 und Polyol 2 (OHZ = 112,6) unter Verwendung von Zinn-Dioctoat als Katalysator mit einem Doppelwellenextruder des Typs ZSK 58 der Firma Werner und Pfleiderer Stuttgart mit einer Verfahrensteillänge von 48 D, unterteilt in 12 Gehäuse, hergestellt. TPU und Polyol wurden in einem derartigen Verhältnis eingesetzt, dass sich eine Kennzahl K von 970 ergab. Die Granulierung erfolgte mittels einer üblichen Unterwassergranuliereinrichtung der Firma Gala (UWG). Das Material wurde anschließend zu Spritzplatten (Dimension der Spritzplatten 110 x 25 x 2) verarbeitet. Die Testplatten wurden 20 Stunden bei 100 °C getempert und deren mechanische Eigenschaften bestimmt.

Beispiel 7

Ein TPU wurde aus ISO-2, Polyol 1 (OHZ = 46,0) und Polyol 4 (OHZ = 170,1) mit einem Doppelwellenextruder des Typs ZSK58 der Firma Werner und Pfleiderer, Stuttgart, mit einer Verfahrensteillänge von 48 D, unterteilt in 12 Gehäuse, hergestellt. Dabei wurden auf ein Gewichtsteil Polyol 10,57 Gewichtsteile Polyol 4 eingesetzt. Die Polyolmischung wurde mit dem Isocyanat in einem derartigen Verhältnis eingesetzt, dass sich eine Kennzahl K von 970 ergab. Die Polyadditionsreaktion wurde unter Verwendung von Zinn-Dioctoat als Katalysator durchgeführt, wobei das Zinn-Dioctoat in einer Menge von 40 ppm, bezogen auf die Gesamtmasse, eingesetzt wurde.

Es wurden die aus folgender Tabelle 3 ersichtlichen Eigenschaften bestimmt:

7

Tab. 3

| Eigenschaft | Einheit | Prüfvorschrift | Beispiel 5 Erfindung | Beispiel 6 Erfindung | Beispiel 7 |
|---|---|---|---|---|---|
| Kennzahl | | | 970 | 970 | 970 |
| Dichte | g/cm$^3$ | DIN EN ISO 1183-1, B | 1,179 | 1,111 | 1.122 |
| Shore-Härte A | - | DIN 53 505 | 96 | 96 | 96 |
| Zugfestigkeit | MPa | DIN 53 504 | 17 | 22 | 10 |
| Reißdehnung | % | DIN 53 504 | 770 | 390 | 1060 |
| Weiterreißwiderstand | kN/m | DIN ISO 34-1 | 93 | 97 | 44 |
| Abrieb | mm$^3$ | DIN ISO 4649 | 99 | 8 | 298 |
| Schmelztemperatur | °C | | 68 | 127 | 64 |
| Kristallisationstemperatur | °C | | 9 | 27 | -15 |

An den erfindungsgemäßen Beispielen 5 bis 7 erkennt man, dass ein TPU mit guten mechanischen Eigenschaften erhalten wird.

Beispiel 8 (Anwendungsbeispiel)

Ein erfindungsgemäßes TPU gemäß Beispiel 5 wurde verwendet, um ein Substrat aus wasserdichtem Nylon zu verkleben. Hierzu wurde die TPU-Folie (100 μm) in geschmolzenem Zustand bei einer Temperatur von 150°C in Abwesenheit von Lösungsmitteln mit 1 kN Druck für eine Minute zwischen zwei Schichte Substrat mit einer Heizpresse aufgetragen. Nach dem Pressen wurden die Proben in üblicher Weise mit einer Zugfestigkeitsprüfmaschine (Firma Zwick, Modell Z 2.5) auf ihre Trennfestigkeit geprüft. Die Proben waren 2,5 cm breit, 20 cm lang und zu 12 cm verklebt. Von den nicht geklebten 8 cm wurden 4 cm in die Maschine eingespannt. Die Messung wurde bei einer Geschwindigkeit von 100mm/min durchgeführt. Die Proben ergaben eine sehr gute Trennfestigkeit von 13,2 N/mm bei guter Verarbeitbarkeit.

**Patentansprüche**

1. Verfahren zum Schmelzkleben unter Verwendung eines thermoplastischen Polyurethans (TPU) erhältlich aus im wesentlichen einem symmetrischen aliphatischen Diisocyanat A und wenigstens einer Isocyanat-reaktiven Verbindung B enthaltend Hydroxyl- und/oder Aminogruppen als Klebstoff, **dadurch gekennzeichnet, dass**

   - das zahlenmittlere Molekulargewicht (Mn) der Verbindung B wenigstens 2200 g/mol beträgt, mit der Maßgabe, dass es wenigstens 950 g/mol beträgt, wenn die Verbindung B ein Sebacinsäureester ist,
   - das Diisocyanat A und die wenigstens eine Isocyanat-reaktive Verbindung B in Gegenwart eines Katalysators für die Polyadditionsreaktion umgesetzt werden,
   - das TPU keinen Kettenverlängerer enthält,
   - das TPU eine Kennzahl K von weniger als 1000, bevorzugt von weniger als 990 und besonders bevorzugt von weniger als 980 hat
   - das Schmelzkleben durch das TPU in geschmolzenem Zustand bei einer Temperatur von 50 °C bis 160°C in Abwesenheit von Lösungsmitteln erfolgt und
   - die Verbindung B ein Polyester ist und zusätzlich ein Polyetherol verwendet wird.

2. Verfahren nach Anspruch 1, **dadurch gekennzeichnet, dass** die Isocyanat-reaktive Verbindung endständig Hydroxyl- und/oder Amino-Gruppen aufweist.

3. Verfahren nach wenigstens einem der vorhergehenden Ansprüche, **dadurch gekennzeichnet, dass** die Kennzahl K einen Wert zwischen 850 und 999 aufweist, bevorzugt zwischen 850 und 990 und besonders bevorzugt zwischen 850 und 980.

4. Verfahren nach wenigstens einem der vorhergehenden Ansprüche, **dadurch gekennzeichnet, dass** das Diisocyanat ein Dicyclohexylmethandiisocyanat (H12MDI) ist.

5. Verfahren nach wenigstens einem der vorhergehenden Ansprüche, **dadurch gekennzeichnet, dass** das Diisocyanat ein Hexamethylendiisocyanat (HDI) ist.

6. Verfahren nach wenigstens einem der vorhergehenden Ansprüche, **dadurch gekennzeichnet, dass** der Katalysator eine Zinn-Verbindung ist.

7. Verfahren nach einem der vorherigen Ansprüche, **dadurch gekennzeichnet, dass** der Polyester ein zahlenmittleres Molekulargewicht (Mn) von maximal 12000 g/mol, bevorzugt maximal 6000 g/mol, insbesondere maximal 4000 g/mol aufweist.

8. Verfahren nach wenigstens einem der vorhergehenden Ansprüche, **dadurch gekennzeichnet, dass** die Verbindung B ein Polyester auf Basis von Butandiol und Adipinsäure ist.

9. Verfahren nach wenigstens einem der vorhergehenden Ansprüche 1 bis 8,
**dadurch gekennzeichnet, dass** die Verbindung B ein Polyester auf Basis von Butandiol und Sebacinsäure ist.

10. Verfahren nach wenigstens einem der vorhergehenden Ansprüche, **dadurch gekennzeichnet, dass** das TPU zum Verkleben von Textilien, Metalle, Holz, Holz enthaltenden Produkten, Kork, Keramik, Glas und Glasfasern sowie massiven oder geschäumten Kunststoffen verwendet wird.

11. Folien, Spritzgussartikel oder Extrusionsartikel enthaltend ein thermoplastisches Polyurethan, erhältlich aus im wesentlichen einem symmetrischen aliphatischen Diisocyanat A und wenigstens einer Isocyanat-reaktiven Verbindung B enthaltend Hydroxyl- und/oder Aminogruppen als Schmelzklebstoff, **dadurch gekennzeichnet, dass**

- das zahlenmittlere Molekulargewicht (Mn) der Verwendung B wenigstens 2200 g/mol beträgt, mit der Maßgabe, dass es wenigstens 950 g/mol beträgt, wenn die Verbindung B ein Sebacinsäureester ist,
- das Diisocyanat A und die Isocyanat-reaktive Verbindung B in Gegenwart eines Katalysators für die Polyadditionsreaktion umgesetzt werden,
- das TPU keinen Kettenverlängerer enthält und
- das TPU eine Kennzahl K von weniger als 1000 hat und
- die Verbindung B ein Polyester ist und zusätzlich ein Polyetherol verwendet wird.

12. Folien, Spritzgussartikel oder Extrusionsartikel, enthaltend eine Schmelzklebung unter Verwendung eines thermoplastischen Polyurethans gemäß wenigstens einem der vorhergehenden Ansprüche.

**Claims**

1. A method of melt adhesive bonding using a thermoplastic polyurethane (TPU) obtainable from essentially a symmetrical aliphatic diisocyanate A and at least one isocyanate-reactive compound B comprising hydroxyl and/or amino groups as an adhesive, wherein

- the number-average molecular weight (Mn) of compound B is at least 2200 g/mol, with the proviso that it is at least 950 g/mol if compound B is a sebacic ester,
- diisocyanate A and at least one isocyanate-reactive compound B are reacted in the presence of a catalyst for the polyaddition reaction,
- the TPU comprises no chain extender,
- the TPU has an index IN of less than 1000, preferably of less than 990, and more preferably of less than 980,
- melt adhesive bonding by the TPU in melt state takes place at a temperature from 50°C to 160°C in the absence of solvents, and
- compound B is a polyester and additionally a polyetherol is used.

2. The method according to claim 1, wherein the isocyanate-reactive compound has hydroxyl groups and/or amino groups terminally.

3. The method according to at least one of the preceding claims, wherein the index IN has a value of between 850 and 999, preferably between 850 and 990, and more preferably between 850 and 980.

4. The method according to at least one of the preceding claims, wherein the diisocyanate is a dicyclohexylmethane diisocyanate (H12MDI).

5. The method according to at least one of the preceding claims, wherein the diisocyanate is a hexamethylene diisocyanate (HDI).

6. The method according to at least one of the preceding claims, wherein the catalyst is a tin compound.

7. The method according to one of the preceding claims, wherein the polyester has a number-average molecular weight (Mn) of not more than 12 000 g/mol, preferably not more than 6000 g/mol, more particularly not more than 4000 g/mol.

8. The method according to at least one of the preceding claims, wherein compound B is a polyester based on butanediol and adipic acid.

9. The method according to at least one of the preceding claims 1 to 8, wherein compound B is a polyester based on butanediol and sebacic acid.

10. The method according to at least one of the preceding claims, wherein the TPU is used to bond textiles, metals, wood, wood products, cork, ceramic, glass, including glass fibers, and also solid or foamed plastics.

11. A film, injection molding or extruded article comprising a thermoplastic polyurethane obtainable from essentially a symmetrical aliphatic diisocyanate A and at least one isocyanate-reactive compound B comprising hydroxyl groups and/or amino groups, as hotmelt adhesive, wherein

- the number-average molecular weight (Mn) of compound B is at least 2200 g/mol, with the proviso that it is at least 950 g/mol if compound B is a sebacic ester,
- diisocyanate A and isocyanate-reactive compound B are reacted in the presence of a catalyst for the polyaddition reaction,
- the TPU comprises no chain extender, and
- the TPU has an index IN of less than 1000, and
- compound B is a polyester and additionally a polyetherol is used.

12. A film, injection molding or extruded article comprising a melt bond using a thermoplastic polyurethane according to at least one of the preceding claims.

**Revendications**

1. Procédé pour le collage à chaud avec utilisation d'un polyuréthane thermoplastique (PUT) pouvant être obtenu à partir d'essentiellement un diisocyanate aliphatique symétrique A et d'au moins un composé B réactif avec un isocyanate, contenant des groupes hydroxy et/ou amino, en tant qu'adhésif, **caractérisé en ce que**

- la masse moléculaire moyenne en nombre (Mn) du composé B est d'au moins 2 200 g/mole, étant entendu qu'elle est au moins de 950 g/mole lorsque le composé B est un ester d'acide sébacique,
- on fait réagir le diisocyanate A et ledit au moins un composé B réactif avec un isocyanate, en présence d'un catalyseur pour la réaction de polyaddition,
- le PUT ne contient pas de prolongateur de chaîne,
- le PUT a un indice K de moins de 1 000, de préférence de moins de 990 et de façon particulièrement préférée de moins de 980,
- le collage à chaud par le PUT à l'état fondu, à une température de 50 °C à 160 °C, s'effectue en absence de solvants et
- le composé B est un polyester et on utilise en outre un polyétherol.

**2.** Procédé selon la revendication 1, **caractérisé en ce que** le composé réactif avec un isocyanate comporte des groupes hydroxy et/ou amino en bout de chaîne.

**3.** Procédé selon au moins l'une quelconque des revendications précédentes, **caractérisé en ce que** l'indice K présente une valeur comprise entre 850 et 999, de préférence entre 850 et 990 et de façon particulièrement préférée entre 850 et 980.

**4.** Procédé selon au moins l'une quelconque des revendications précédentes, **caractérisé en ce que** le diisocyanate est un dicyclohexylméthanediisocyanate (H12MDI) .

**5.** Procédé selon au moins l'une quelconque des revendications précédentes, **caractérisé en ce que** le diisocyanate est un hexaméthylènediisocyanate (HDI).

**6.** Procédé selon au moins l'une quelconque des revendications précédentes, **caractérisé en ce que** le catalyseur est un composé contenant de l'étain.

**7.** Procédé selon au moins l'une quelconque des revendications précédentes, **caractérisé en ce que** le polyester présente une masse moléculaire moyenne en nombre (Mn) d'au maximum 12 000 g/mole, de préférence d'au maximum 6 000 g/mole, en particulier d'au maximum 4 000 g/mole.

**8.** Procédé selon au moins l'une quelconque des revendications précédentes, **caractérisé en ce que** le composé B est un polyester à base de butanediol et d'acide adipique.

**9.** Procédé selon au moins l'une quelconque des revendications 1 à 8, **caractérisé en ce que** le composé B est un polyester à base de butanediol et d'acide sébacique.

**10.** Procédé selon au moins l'une quelconque des revendications précédentes, **caractérisé en ce que** le PUT est utilisé pour le collage de textiles, métaux, bois, produits contenant du bois, liège, céramique, verre et fibres de verre ainsi que matières plastiques pleines ou expansées.

**11.** Films, articles moulés par injection ou articles extrudés, contenant un polyuréthane thermoplastique, pouvant être obtenu à partir d'essentiellement un diisocyanate aliphatique symétrique A et d'au moins un composé B réactif avec un isocyanate, contenant des groupes hydroxy et/ou amino, en tant qu'adhésif fusible, **caractérisés en ce que**

- la masse moléculaire moyenne en nombre (Mn) du composé B est d'au moins 2 200 g/mole, étant entendu qu'elle est au moins de 950 g/mole lorsque le composé B est un ester d'acide sébacique,
- on fait réagir le diisocyanate A et le composé B réactif avec un isocyanate, en présence d'un catalyseur pour la réaction de polyaddition,
- le PUT ne contient pas de prolongateur de chaîne,
- le PUT a un indice K de moins de 1 000 et
- le composé B est un polyester et on utilise en outre un polyétherol.

**12.** Films, articles moulés par injection ou articles extrudés, comportant un collage à chaud avec utilisation d'un polyuréthane thermoplastique selon au moins l'une quelconque des revendications précédentes.

EP 2 552 987 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1256822
- DE 1930336
- DE 3717070 A1
- DE 4035280 A1
- DE 10163857 A1
- DE 19700014 A1
- DE 19519391 A1
- US 20050288476 A1

**In der Beschreibung aufgeführte Nicht-Patentliteratur**

- **ISKENDER ; YILGOR.** *Polymer Reviews,* 2007, vol. 47, 487-510
- Plastics Additive Handbook. Hanser Publishers, 2001, S. 98-S. 136
- Plastics Additive Handbook. Hanser Publishers, 2001, 98-107116-121
- Plastics Additive Handbook. Hanser Publishers, 2001, 116-122
- **H. ZWEIFEL.** Plastics Additive Handbook. Hanser Publishers, 2001, 123-136
- Plastics Additive Handbook. Hanser Publishers, 2001